# EUROPEAN PATENT APPLICATION

(11) **EP 2 862 800 A1**
(43) Date of publication of application: **22.04.2015**
(21) Application number: 14189413.9
(22) Date of filing: 17.10.2014
(51) Int. Cl.: B64C 11/26, B64C 11/06, F01D 5/30

(54) **Retention assembly with a conical interface for a propeller**

(30) Priority: 18.10.2013 US 201314057189
(71) Applicant: Hamilton Sundstrand Corporation, Windsor Locks, CT 06096-1010 (US)
(72) Inventor: Nagle, David P., Westfield, MA Massachusetts 01085 (US); Carvalho, Paul A., Hadley, MA Massachusetts 01035 (US)
(74) Representative: Hull, James Edward

(57) **Abstract**

A retention assembly (32) for a propeller blade (30) includes an inner ring (40) that is conformally shaped to a bore (41) of an annular loop (38), the annular loop (38) being associated with a root portion (36) of the propeller blade (30); a base (44) that is configured to be immediately adjacent the annular loop (38); an annular outer ring (42) including a bearing race interface (58) that is conical in shape and includes a radially inner surface that conforms to a radially outer surface of the annular loop (38); and an adhesive that adhesively connects complementary surfaces of the outer ring (42) and the annular loop (38). Also, a propeller blade assembly (22) includes a propeller blade (30) having a blade portion (34) and a root portion (36); and the retention assembly (32) that is configured to attach to the propeller blade (30).

## Description

### BACKGROUND

The subject matter disclosed herein relates generally to propeller systems and blades and, more particularly, to a lightweight propeller blade assembly with a conical blade to sleeve interface.

### DESCRIPTION OF RELATED ART

Modem propeller blades typically incorporate composite materials that reduce weight and enhance performance. The composite blades typically include a blade portion and a root portion which extends into a hub arm of the hub of a propeller system and which is secured to and rotatable relative to the hub arm via a retention assembly. A challenge with lightweight composite blades is that a bending moment (BM) capacity of the retention assembly to the hub arm is often reduced due to a lower centrifugal load (CL) of the blade. A typical lightweight propeller blade using a type of arrangement to address BM includes the system shown in U.S. Pat. No. 6,676,080. As can be seen from the drawings of this patent, the bearing races are sized for bearings that can withstand bending moments, but the interface between the composite blade and outer ring bearing race may become unloaded due to insufficient centrifugal loading. This is an undesirable condition which may reduce the life of the composite blade portion and/or outer ring.

Thus, there is a need for a lightweight propeller blade with a conical blade to sleeve interface that can withstand high bending moments at lower centrifugal loading.

### BRIEF SUMMARY

According to an aspect of the invention, a retention assembly for a propeller blade includes an inner ring that is conformally shaped to a bore of an annular loop, the annular loop being associated with a root portion of the propeller blade; a base that is configured to be immediately adjacent the annular loop; an annular outer ring including a bearing race interface that is conical in shape and includes a radially inner surface that conforms to a radially outer surface of the annular loop; and an adhesive that adhesively connects complementary surfaces of the outer ring and the annular loop.

According to another aspect of the invention, a propeller blade assembly includes a propeller blade including a blade portion and a root portion; and a retention assembly configured to attach to the propeller blade. The retention assembly includes an inner ring that is conformally shaped to a bore of an annular loop, the annular loop being associated with a root portion of the propeller blade; a base that is configured to be immediately adjacent the annular loop; an annular outer ring including a bearing race interface that is conical in shape and includes a radially inner surface that conforms to a radially outer surface of the annular loop; and an adhesive that adhesively connects complementary surfaces of the outer ring and the annular loop.

Other aspects, features, and techniques of the invention will become more apparent from the following description taken in conjunction with the drawings.

### BRIEF DESCRIPTION OF THE SEVERAL VIEWS OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which like elements are numbered alike in the several FIGURES:
FIG. 1 is a plan view of an aircraft according to an embodiment of the invention; and
FIG. 2 is a cross-sectional view of a propeller blade assembly of FIG. 1 according to an embodiment of the invention.

### DETAILED DESCRIPTION OF THE INVENTION

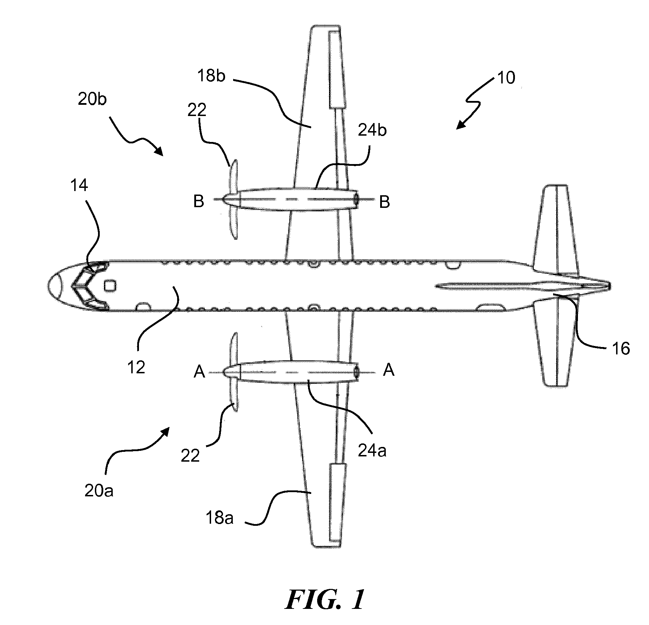

Referring to the drawings, FIG. 1 is a plan view of an aircraft 10 having a plurality of lightweight propeller blade assemblies 22 with an improved retention assembly 32 according to an embodiment of the invention. The aircraft 10 includes a fuselage 12, a cockpit 14, and a tail 16. Attached to the fuselage 12 are left and right wings 18a, 18b respectively. Each wing 18a, 18b incorporates a respective propeller 20a, 20b that is aligned on respective axes A, B. Each propeller 20a, 20b includes a plurality of propeller blade assemblies 22 that are driven for rotation by respective gas turbine engines 24a, 24b. Although a specific aircraft is illustrated and described herein, other propeller driven aircrafts are within the scope of the invention.

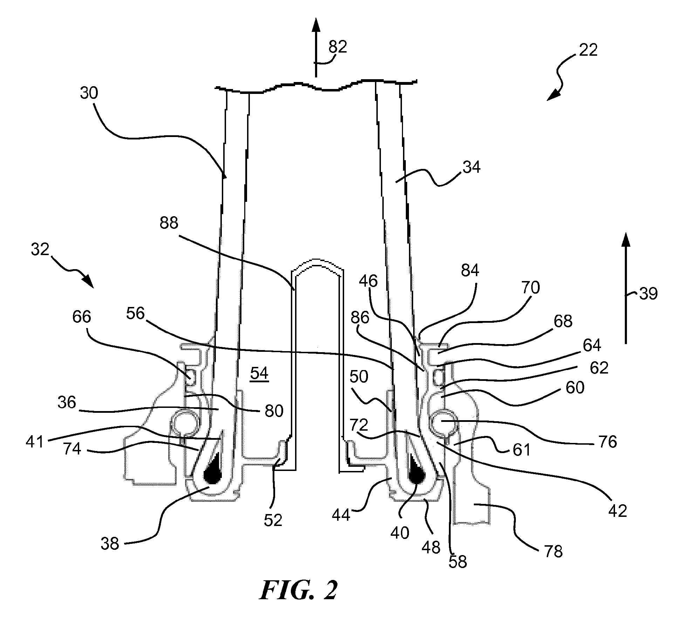

Referring to FIG. 2, a cross-section view of a lightweight propeller blade assembly 22 that includes a conical blade to sleeve interface is illustrated according to an embodiment of the invention. The propeller blade assembly 22 includes a propeller blade 30 that is received and secured to a retention assembly 32. The propeller blade 30 includes a blade portion 34 that terminates into a root portion 36. The propeller blade 30 is generally cylindrical in shape at root portion 36 and transitions to an airfoil shape that thins and flattens toward a tip (not shown) which is directionally opposite root portion 36 in a direction of arrow 39 (i.e., from inboard/hub end to an outboard/tip end of the propeller blade 30). In embodiments, a shape of propeller blade 30 may also spiral or twist toward the tip (not shown) in a known manner according to the type of propeller blade that is used. In embodiments, propeller blade 30 including blade portion 34 and root portion 36 may be constructed of one or more layers of unidirectional and/or woven glass fibers, and one or more layers of unidirectional and/or woven graphite fibers that are embedded in a suitable resin material as is well-known to a person of ordinary skill in the art. The root portion 36 is configured to attach to a retention assembly 32. The root portion 36 includes an annular loop 38 that forms a teardrop-shaped bore 41. It is to be appreciated that the retention assembly 32 is configured to attach to the propeller blade 30 and increase a bending moment capacity of the propeller blade retention for lower centrifugal loads, as will be described in greater detail below.

Retention assembly 32 includes an inner ring 40, an outer ring 42, base 44, and a sleeve 46. In embodiments, rings 40, 42 may be machined from high strength stainless steel, although aluminum, titanium or other suitable metals or composites may be used. Inner ring 40 is an annular ring and may be conformally shaped to bore 41 (i.e., inner ring 40 has a tear-drop shaped cross-section) and is located inside the teardrop-shaped bore 41. The base 44 is annular and is positioned immediately adjacent annular loop 38 and includes a lower end 48 that interfaces with a bottom surface of annular loop 38, a wall 50 that interfaces with an inner surface 56 of annular loop 38, and a lateral portion 52 that generally resides within a hollow root cavity 54. The wall 50 extends upwardly (in direction of arrow 39) from lower end 48 into a hollow root cavity 54 and is in frictional engagement with inner surface 56 of root portion 36. A balance tube 88 extends through a central opening defined by lateral portion 52 in base 44. The balance tube 88 and lateral portion 52 close hollow root cavity 54 of root portion 36 to prevent intrusion of oil and/or moisture into the hollow root cavity 54 which may otherwise damage propeller blade 30. The annular loop 38 and inner ring 40 are sandwiched between base 44 and outer ring 42. The base 44 may be machined from aluminum material, but may alternatively be constructed of other materials, such as steel, composites, or the like.

The outer ring 42 is generally annular in shape and includes, moving from an inboard/hub end to an outboard/blade tip end, a bearing race interface 58, a bearing race groove 60, a plurality of flanges 62, 64 that define a lower annular groove 66, and an upper annular groove 68 that terminates into an annular flange 70. The bearing race interface 58 is generally conical in shape and includes a radially inner surface 72 that is complementary to a radially outer surface 74 of annular loop 38. The annular loop 38 and outer ring 42 are adhesively bonded to each other at these surfaces 72, 74 in order to subject the interface, formed by connecting surfaces 72, 74, primarily to shear stresses rather than peel stresses which is not the case in prior art propeller blades which primarily sees peel stresses when subjected to high bending moments relative to the centrifugal loading. In the present invention, increasing the overall shear stresses at this interface increases a bending moment capacity of the propeller blade retention assembly 32. In embodiments, the adhesive could be a structural adhesive such as an epoxy and/or a compliant epoxy such as polyurethane, polysulfide or RTV silicone. In one example, Hysol® EA 9346.5 epoxy paste adhesive manufactured by the Henkel Corporation may be used as the structural adhesive.

Also illustrated in FIG. 2, bearing race groove 60 is a bearing race that receives a bearing assembly 76 such as, for example, an angular contact ball bearing assembly, tapered roller bearing assembly, deep groove thrust or roller bearing assembly, two-piece bearing race assembly, or the like. Although a single bearing race groove 60 is shown and described, in an embodiment, two or more bearing race grooves substantially similar may also be provided for use with a propeller hub that can use a multi-row bearing assembly. Flanges 62, 64 define an annular groove that is adapted to receive an annular O-ring 66. The flanges 62, 64 bear against a retaining surface 80 of a propeller hub 78 to contain the O-ring 66. The bearing race groove 60 cooperates with the hub race groove 61 to contain the bearing assembly 76 and prevent separation of propeller blade assembly 22 from propeller hub 78 when high outward centrifugal force is applied in a direction of arrow 82 during rotation of propeller hub 78. Upper annular groove 68 is adapted to receive a locking ring (not shown) for holding propeller blade assembly 22 against movement into the propeller hub 78 when not in use. Also, upper annular groove 68 terminates into an annular flange 70.

A sleeve 46 extends between outer ring 42 and root portion 36. Sleeve 46 may be adhesively bonded to outer ring 36 and to root portion 42 and is a single-piece construction and may be molded of a plastic material, such as Delrin® manufactured by Dupont™ or other acetal material, polyurethane, etc. The sleeve 46 has an annular flange 84 that abuts against annular flange 70 of outer ring 42 and a wedge-shaped portion 86 that extends downwardly from annular flange 84 (i.e., toward propeller hub 78) between outer ring 42 and root portion 36. Sleeve 46 acts as a lower modulus cushion, which can be approximately 50 times less stiff than steel, for absorbing bending loads from blade portion 34. In embodiments, the adhesive could be a structural adhesive such as an epoxy and/or a compliant epoxy such as polyurethane, polysulfide or RTV silicone.

In prior art propeller blades, the retention capacity of an interface between the composite blade and outer ring bearing race may become unloaded due to insufficient centrifugal loading which may reduce the life of the blade portion and/or the outer ring of the propeller blade. However, benefits of the present invention with a use of a conical shaped bearing race interface 58 that is adhesively coupled to root portion 36 along mutual interfaces provides an improved retention capacity propeller blade assembly 22 because it increases a bending moment capacity of the propeller blade 30. Additional benefits of using an adhesive is that an adhesive layer between the contact surface of outer ring 42 and a root portion 36 of propeller blade 30 provides primarily shear stresses in the propeller blade 30 and minimizes peel stresses thereby preventing unloading of the propeller blade 30 at the bearing race interface 58.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. For instance, aspects of the invention are not limited to propeller blades for aircraft, and can be used in wind turbines and other systems with rotary elements. Many modifications, variations, alterations, substitutions, or equivalent arrangement not hereto described will be apparent to those of ordinary skill in the art without departing from the scope of the invention. Additionally, while the various embodiment of the invention have been described, it is to be understood that aspects of the invention may include only some of the described embodiments. Accordingly, the invention is not to be seen as limited by the foregoing description, but is only limited by the scope of the appended claims.

## Claims

1. A retention assembly (32) for a propeller blade (30), comprising:
an inner ring (40) that is conformally shaped to a bore (41) of an annular loop (38), the annular loop (38) being associated with a root portion (36) of the propeller blade (30);
a base (44) that is configured to be immediately adjacent the annular loop (38);
an annular outer ring (42) including a bearing race interface (58) that is conical in shape and includes a radially inner surface that conforms to a radially outer surface of the annular loop (38); and
an adhesive that adhesively connects complementary surfaces of the outer ring (42) and the annular loop (38).

2. The retention assembly (32) of claim 1, wherein the outer ring (42) further comprises a bearing race groove (60), a lower annular groove (66), and an upper annular groove (68).

3. The retention assembly (32) of claim 2, further comprising a bearing assembly (76) coupled to the bearing race groove (60).

4. The retention assembly (32) of claim 2 or 3, wherein the outer ring (42) further comprises a plurality of annular flanges (64; 64) that contains the lower annular groove (66).

5. The retention assembly (32) of claim 2, 3 or 4, wherein the lower annular groove (66) is configured to receive an annular O-ring (66).

6. The retention assembly (32) of any preceding claim, further comprising a sleeve (46) that is adhesively connected to each of the root portion (36) and the outer ring (42).

7. The retention assembly (32) of any preceding of claim, wherein the adhesive couples the radially inner surface of the bearing race interface (58) to the radially outer surface of the annular loop (38).

8. The retention assembly (32) of any preceding claim, wherein the annular loop (38) is configured to receive the inner ring (40) within the bore (41).

9. A propeller blade assembly (32), comprising:
a propeller blade (30) including a blade portion (34) and a root portion (36); and
the retention assembly (32) of any preceding claim configured to attach to the propeller blade (30).

10. The propeller blade assembly (22) of claim 9, further comprising a hub (78) having a hub race groove (61) that is coupled to a or the bearing assembly (76).
